# EUROPEAN PATENT SPECIFICATION

(11) **EP 2 749 362 B1**
(45) Date of publication and mention of the grant of the patent: **16.01.2019**
(21) Application number: 12825241.8
(22) Date of filing: 04.04.2012
(51) Int. Cl.: B09B 3/00, F23G 5/00, C10J 3/20

(54) **METHOD FOR TREATING SOLID WASTE BASED ON A GRADIENT GENERATED BY TWO DIFFERENT HEAT SOURCES**
VERFAHREN ZUR BEHANDLUNG VON FESTSTOFFABFÄLLEN AUF BASIS VON ZWEI VERSCHIEDENEN WÄRMEQUELLEN GENERIERTEN GRADIENTEN
PROCÉDÉ DE TRAITEMENT DE DÉCHETS SOLIDES BASÉ SUR UN GRADIENT GÉNÉRÉ PAR DEUX SOURCES THERMIQUES DISTINCTES

(30) Priority: 25.08.2011 BR 1104219
(43) Date of publication of application: 02.07.2014
(73) Proprietor: Solum Ambiental e Equipamentos Electromecânicos Ltda., 12305-490 Jacareí - SP (BR)
(72) Inventor: PEREIRA FILHO, Alberto Carlos, CEP: 12.243-210 São José dos Campos - SP (BR)
(74) Representative: Stewart, Hazel
(86) International application number: PCT/BR2012/000094
(87) International publication number: WO 2013/026110

(56) References cited:
- WO-A1-00/56407
- WO-A2-97/49641
- DE-A1- 4 311 769
- DE-A1- 4 327 320
- DE-C1- 19 949 142
- FR-A1- 2 792 926
- UA-U- 24 032
- US-A- 4 831 944

## Description

### Field of the Invention

This invention describes a patent of invention regarding an unprecedented method for treating solid waste based on a gradient generated by two different heat sources, especially comprising a compact method to be applied in the field of destruction of solid waste, including the ones presented in Class I of Brazilian standards for disposal of materials, which are considered dangerous, according to their infectious, physical and chemical properties, by offering risk to public health and the environment, by virtue of one of the characteristics of flammability, corrosivity, reactivity, toxicity and pathogenicity. The method is effected by pyrolysis resulting from thermal gradient in the reactor, which runs at a negative pressure, supplied by radiation sources or thermal induction so that the solid residue becomes inert through its fusion, this does not originate complex molecules, like dioxins and furans, with a minimal production of effluent gases.

This method is capable of being used in industries, hospitals, ports, airports, ships, oil platforms, islands, condos and in any place where the need to completely destroy waste is necessary effectively and safely.

### Background of the invention

Based on the complexity of contamination problems and the considerable increase in production, consumption and further disposal of products considered dangerous of Class I, there was a need to elaborate specific laws, currently in place in various parts of the world, such as European Union, United States, Africa and Brazil, where environmental legislation requires compliance with standards for proper disposal of solid waste from all classes in order to prevent imminent environmental collapse whether strong procedures are not taken and implemented.

In this context, various directions or aspects can be taken into account, with emphasis to landfill sites, composting and incineration being more pertinent to this invention.

Basically, incineration is based on the combustion of waste/residue, and this is a technique acceptable to a certain point, since it demands high investments explained by the need for strict control of polluting gases emissions generated by this combustion, especially when dealing with toxic residues. In a general view, incinerators do not solve it entirely, but just convert the toxic residue in other forms, some of them with a greater toxicity than the original material.

The current prior art anticipates some documents related to the treatment of solid waste, such as the Brazilian patent nº PI 0104060-0 (priority rights pertaining to US 60/233205 from 15/09/2000) namely "Method for Product Incineration regarding Industrial Residue Production". This document provides a new control method of the incineration temperature in response to the changes in the emission products and in waste streams which results in a greater and reliable control of the incineration and emissions resulting thereof. The operational and capital costs are reduced significantly as its result.

The Brazilian patent nº PI 0601690-1 namely "Integrated System for Treatment and Disposal of Solid Waste" that aims to: integrate its methods of collection, treatment and disposal; eliminate the generation of environmental liabilities; increase efficiency and effectiveness and the quantity of reusable products during and after the path leading to its destination. It involves the receipt of residues at the treatment plant, the pre-selection of the same residues; shredding the organic material; accelerated composting; incineration; treatment of gases, ashes and liquid effluent; and the generation of raw materials and reusable products for society in general.

The Brazilian patent nº PI 0803036-7 namely "Method for Solid Waste Treatment based on a Plasma Technology Reactor," presents a traditional assemble and configuration consisting of: combustor (furnace, combustion and burner reactor or chamber), after-combustor, gas treatment and its exhaustion (flue). This method, however, differs from the others by its unique features, the most important being the use of reactor therein described with the plasma technology.

DE19949142C1 describes a method for preparation of material, conversion and subsequent treatment of waste material. Several thermal treatment steps are used including a low temperature stage and high temperature stage.

US4831944A describes a process which utilizes a column of waste upwardly transversed, at least partially, by a stream of hot gas. As a result, non-burned residues are destroyed and the flow of molten residues is improved.

Therefore, the prior art documents herein cited refer to a work of combustion, generating an excess of gases, which implies high investment in the filtering system, which is not always effective.

Otherwise, the proposed invention does not make use of combustion, but of two different heat sources, in which the temperature inside the two twinned chambers varies between 900°C at the top and 1600°C, at the bottom, thereby generating the gradient, liquefying all solids completely.

### Summary of the invention

Being aware of the prior art, its shortcomings and limitations, the Inventor, a person with special knowledge in the field, after deep research and studies, has created this method for treating solid waste based on a gradient generated by two different heat sources, which relates to a sequenced technological assembly, operated automatically, which is capable of processing solid waste of any kind based on thermal gradient generated by two reactive and/or inductive heat sources, with no need for the combustion of said assemble, or of an auxiliary equipment, or the presence of air, as well. The temperature inside the thermal reactor comprised of two twinned chambers ranges between 900°C at the top and 1600°C at the bottom, which generates the gradient, completely liquefying all the solids, even ferrous or inert materials, such as sand, as well as infectious, pathological, and organochlorine materials, having as its solid sub-products a ceramic matrix of commercial application, also inert at the bottom of the reactor. The method is pyrolysis and it operates in negative atmosphere, not allowing gas leaks; therefore, in the absence of oxygen with a high temperature, it does not conduce to a formation of dioxins or furans. The gases formed inside the reactor are sucked and cooled sharply in a heat exchanger, of quench type, and then to be treated with separation of oil/water, and neutralized in a particularly alkaline immersion tank. Filters based on activated charcoal ensure that emission levels meet environmental standards. At the end of the method, a small burner, based on electric discharges technology, is used to burn the combustible residual gases such as H₂ and CO, and also for the breakdown of complex molecules. For safety purposes, a combustion catalyst is coupled on the output of the method and the gases are directed to the flue.

In short, this invention presents as most prevalent general advantages:
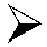 Functionality - enabled by compact devices that operate automatically, where anyone can feed the reactor through its door, with waste to be treated, which does not need to be selective;
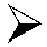 Logistical - convenience and practicality on the treatment of waste immediately and safely;
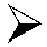 Environmental - it treats all the material/waste/residues regardless of classification, meeting all environmental standards; does not produce ashes; gas emissions is reduced and non-toxic;
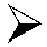 Economical - costs lower than the ones by hiring of outsourced services, the automatic system allows minimal power consumption in the pyrolysis;
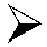 Safety - the user has absolute control over the allocation of waste/residues, not incurring in the risk of punishment due to irregular procedures of an outsourcing contracted for this service.

### Brief description of drawing

To follow, the invention will be explained with reference to the single accompanying drawing, in which it is represented:

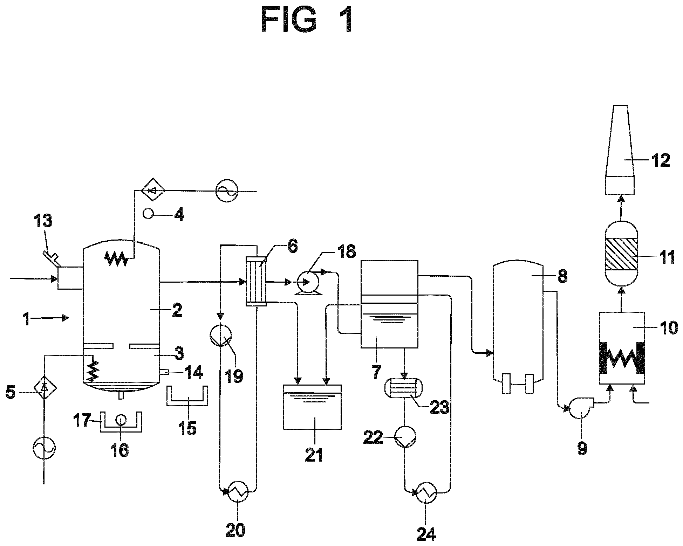

Figure 1: Flowchart of the method for treating solid waste based on a gradient composed of two different heat sources.

### Detailed description of the invention

The method for treating solid waste based on a gradient generated by two different heat sources, object of this invention, relates to a sequenced technological assembly, capable of processing solid waste of any class, operating through a reactor (1) with two chambers (2 and 3), each having a heat source (4 and 5) where a thermal gradient is generated, followed by a heat exchanger (6) where the gases are sharply cooled and then driven to a neutralization tank (7), and then to be directed to a activated-charcoal filter (8), through the action of a blower (9), to finally enter into a burner (10) working under electric discharges, passing through a catalyst (11) and flue (12), where they are extravasated to the atmosphere in a totally inert state.

More particularly, this method, according to the flowchart of figure 1 shows, is based on the principle of use of a thermal gradient. In the primary chamber (2) after the waste being fed through the door (13), the material to be processed is driven to the centre of the reactor (1), and in the primary chamber (2) it suffers the effect of a moderate radiation with maximum temperature of 1200°C and can operate at 900°C, depending on the residue in method and the saving electricity. Thus, the solid residue at 1200°C in a substantial absence of air, undergoes a pyrolysis with gases formation in a small amount, and the ashes produced in this step are directed, by gravity, to the second chamber (3). The chamber (2) is assisted by a heat source (4) able to generate heat in the range of 900°C to 1200°C, so that of calculated power, which optimizes and ensures complete pyrolysis of non-inert residues, resulting in the formation of ash, gases and heated inert materials. In the fusion chamber (3), also assisted by a heat source (5), the ashes and inert materials from the primary chamber (1) are liquefied at temperatures in the range of 1400°C - 1600°C, with automatically controlled power, being the heat source (5) adjusted according to the material to be processed. The product of the liquefaction is poured through an opening (14) in the reactor (1), taken in a crucible (15), cooled and vitrified. This sub-product has inert properties in regards to toxicity. Having a presence of ferrous metals in the waste such as nickel, chromium, iron and others, they will also be liquefied and due to their greater density, will be formed at the bottom of the reactor (1) a second stage of liquefied material, which through a lower opening (16) is poured into the crucible (17). On the other hand, the pyrolysis resulting gases are sucked by a suction device (18), which causes the reactor (1) to work on a negative pressure, and they are directed to the heat exchanger (6) where they undergo a sharply cooling by circulating water through a pump (19) and cooled by air in an outside environment aided by a radiator (20). In the heat exchanger (6) there is condensation of oil and water that are carried by gravity to a tank (21). Once cooled, these gases are injected into an alkaline water tank (7) with concentrated sodium hydroxide to greater cooling, pH neutralization and treatment. The water in this tank (7) is continuously re-circulated with the aid of a pump assembly (22) and filter (23) to then be cooled in the radiator (24) and return to the tank (7) on itself. Furthermore, the effluent gases from the tank (7) are sucked by the blower (9) to an activated charcoal filter (8), which promotes complete reduction of particulates, and complex molecules harmful to the environment, such as dioxins and furans. After passing through the activated charcoal filter (8), they are forwarded to a combustor (10) where the combustible gases are oxidised. The combustor (10) has a generator of electric discharges to assist combustion, thus complete ensuring the burning of such gases in the presence of atmospheric air. Finally, after being burned, these gases pass through a catalyst (11) which ensures a maximum reduction of NOx, CO and other gases, being released into the atmosphere through a flue (12).

Optionally, for economy purposes, the method can happen without the fusion of ashes and inert solids, for that the heat source (5) is not triggered. In that case, ashes and inert products are the sub-products of the method.

## Claims

1. A method for treating solid waste based on a gradient generated by two different heat sources (4 and 5), the method comprising:
using a reactor (1) on negative pressure, the reactor comprising two chambers (2 and 3), a pyrolysis chamber (2) and a fusion chamber (3) for ashes and inert materials, in which a thermal gradient, that can be from 900°C to 1600°C, is generated by controlled power heat sources (4 and 5) in the pyrolysis chamber (2) and the fusion chamber (3), respectively;
sucking the resulting pyrolysis gases using a suction device (18) and directing them to a heat exchanger (6) where they undergo sharp cooling by water that is circulated through a pump (19) and cooled by air in an outside environment aided by a radiator (20); condensed oil and water in the heat exchanger (6) are carried by gravity to a tank (21);
injecting the gases, once cooled, into an alkaline water tank (7), whose fluid is constantly recirculated with the aid of a pump assembly (22) and filter (23) and is cooled in a radiator (24);
using a blower (9) to suck the effluent gases from the tank (7) across an activated charcoal filter (8) and directing them to a combustor (10) having a generator of electric discharges;
burning the gases, then passing them through a catalyst (11) which ensures the maximum reduction of NOx, CO and other gases, and then releasing them to the atmosphere through a flue (12).

2. A method according to claim 1, wherein the product of liquefaction is poured through an opening (14) in the reactor (1), collected in a crucible (15), cooled and vitrified.

3. A method according to claim 2, wherein, the waste comprises ferrous metals such as nickel, chromium, iron and others, and wherein they are liquefied and accumulated at the bottom of the reactor (1) in a second phase of liquefied material that is poured through a lower opening (16) into a crucible (17).

4. A method according to claim 1, wherein the heat source (5) in the fusion chamber (3) is not triggered so that there is not fusion of ashes and inert solids.

## Patentansprüche

1. Verfahren zum Aufbereiten von festem Abfall basierend auf einem von zwei verschiedenen Wärmequellen (4 und 5) erzeugten Wärmegradienten, wobei das Verfahren Folgendes umfasst:
Verwenden eines Reaktors (1) unter Unterdruck, wobei der Reaktor zwei Kammern (2 und 3), eine Pyrolysekammer (2) und eine Schmelzkammer (3) für Aschen und inerte Stoffe umfasst, wobei ein Temperaturgradient, der von 900 °C bis 1600 °C, betragen kann, mittels Wärmequellen mit geregelter Leistung (4 und 5) in der Pyrolysekammer (2) bzw. der Schmelzkammer (3) erzeugt wird;
Saugen der resultierenden Pyrolysegase unter Verwendung einer Saugvorrichtung (18) und Lenken derselben zu einem Wärmetauscher (6) wo sie eine scharfe Abkühlung mittels Wasser erfahren, das durch eine Pumpe (19) zirkuliert wird und, von einem Radiator (20) unterstützt, von Luft in einer Außenumgebung gekühlt wird; wobei kondensiertes Öl und Wasser in dem Wärmetauscher (6) mittels Schwerkraft zu einem Behälter (21) gefördert werden;
Injizieren der Gase, nachdem sie abgekühlt sind, in einen Behälter (7) mit alkalischem Wasser, dessen Fluid mit Hilfe einer Pumpenanordnung (22) und einem Filter (23) ständig umgewälzt wird und in einem Radiator (24) gekühlt wird;
Verwenden eines Gebläses (9) zum Saugen der Abgase aus dem Behälter (7) über einen Aktivholzkohlefilter (8) und Lenken derselben zu einer Brennkammer (10) mit einem Erzeuger elektrischer Entladungen;
Verbrennen der Gase, dann Leiten derselben durch einen Katalysator (11), der die maximale Reduktion von NOx, CO und anderen Gasen sicherstellt, und dann Freisetzen derselben in die Atmosphäre durch einen Abzug (12).

2. Verfahren nach Anspruch 1, wobei das Produkt der Verflüssigung durch eine Öffnung (14) in dem Reaktor (1) gegossen, in einem Schmelztiegel (15) gesammelt, abgekühlt und verglast wird.

3. Verfahren nach Anspruch 2, wobei der Abfall Eisenmetalle, wie etwa Nickel, Chrom, Eisen und andere, umfasst und wobei sie verflüssigt und am Boden des Reaktors (1) in einer zweiten Phase verflüssigten Materials angesammelt werden, die durch eine untere Öffnung (16) in einen Schmelztiegel (17) gegossen wird.

4. Verfahren nach Anspruch 1, wobei die Wärmequelle (5) in der Schmelzkammer (3) nicht ausgelöst wird, sodass kein Verschmelzen von Aschen und inerten Feststoffen stattfindet.

## Revendications

1. Procédé de traitement de déchets solides fondé sur un gradient généré par deux sources de chaleur différentes (4 et 5), le procédé consistant à :
utiliser un réacteur (1) sous pression négative, le réacteur comprenant deux chambres (2 et 3), une chambre de pyrolyse (2) et une chambre de fusion (3) destinées à des cendres et des matériaux inertes, dans lesquelles un gradient thermique, qui peut aller de 900 °C à 1600 °C, est généré par des sources de chaleur à puissance contrôlée (4 et 5) dans la chambre de pyrolyse (2) et la chambre de fusion (3), respectivement ;
aspirer les gaz de pyrolyse résultants à l'aide d'un dispositif d'aspiration (18) et les envoyer vers un échangeur de chaleur (6) dans lequel ils subissent un refroidissement brusque avec de l'eau qui est mise en circulation par une pompe (19) et refroidie par de l'air dans un environnement extérieur à l'aide d'un radiateur (20) ; l'huile et l'eau condensées dans l'échangeur de chaleur (6) sont transportées par la gravité vers un bac (21) ;
injecter les gaz, une fois refroidis, dans un bac (7) d'eau alcaline, dont le fluide est constamment mis en circulation à l'aide d'un ensemble pompe (22) et d'un filtre (23) et est refroidi dans un radiateur (24) ;
utiliser une soufflante (9) pour aspirer les gaz effluents du bac (7) à travers un filtre à charbon actif (8) et les envoyer vers une chambre de combustion (10) pourvue d'un générateur de décharges électriques ;
brûler les gaz, puis les faire passer à travers un catalyseur (11) qui assure la réduction maximale des NOx, du CO et d'autres gaz, puis les libérer à l'atmosphère à travers un conduit de cheminée (12).

2. Procédé selon la revendication 1, le produit de liquéfaction étant versé à travers une ouverture (14) dans le réacteur (1), collecté dans un creuset (15), refroidi et vitrifié.

3. Procédé selon la revendication 2, les déchets comprenant des matériaux ferreux tels que du nickel, du chrome, du fer et autres, et ceux-ci étant liquéfiés et accumulés dans le fond du réacteur (1) dans une seconde phase de matériau liquéfié qui est versée à travers une ouverture inférieure (16) dans un creuset (17).

4. Procédé selon la revendication 1, la source de chaleur (5) dans la chambre de fusion (3) n'étant pas déclenchée de telle sorte qu'il n'y a pas de fusion des cendres et des solides inertes.
